# EUROPÄISCHE PATENTSCHRIFT

(11) **EP 1 184 759 B1**
(45) Veröffentlichungstag und Bekanntmachung des Hinweises auf die Patenterteilung: **05.09.2007**
(21) Anmeldenummer: 01118073.4
(22) Anmeldetag: 25.07.2001
(51) Int. Cl.: G05B 19/05

(54) **Flow Chart Programmierung für industrielle Steuerungen, insbesondere Bewegungssteuerungen**
Flow chart programmation for industial controllers, especially motion controllers
Programmation de diagramme de flux pour contrôleurs industriels, en particulier contrôleurs de déplacement

(30) Priorität: 07.08.2000 DE 10038441; 07.08.2000 DE 10038440; 07.08.2000 DE 10038439
(43) Veröffentlichungstag der Anmeldung: 06.03.2002
(73) Patentinhaber: SIEMENS AKTIENGESELLSCHAFT, 80333 München (DE)
(72) Erfinder: Schmitt, Regina, 91056 Erlangen (DE); Wagner, Peter, 91217 Hersbruck (DE)

(56) Entgegenhaltungen:
- US-A- 5 392 207
- US-A- 5 485 620
- US-A- 5 508 909
- US-A- 5 801 942

## Beschreibung

Die Erfindung bezieht sich auf ein Verfahren für die Programmierung von industriellen Steuerungen, insbesondere Bewegungssteuerungen, wobei der Anwender mit einem Editor graphische Elemente, insbesondere Kontrollstrukturen und Funktionsblöcke, zu einem auf einer Anzeigeeinrichtung visualisierbaren Flow Chart verknüpft.

Im industriellen Umfeld ist es bekannt, sowohl für die Steuerung eines technischen Prozesses als auch für die Steuerung der Bewegung einer Verarbeitungs- bzw. Produktionsmaschine graphische Eingabehilfsmittel sowie einen Bildschirm zur Visualisierung zu verwenden (Hans D. Kief: "NC/CNC Handbuch", 2000, Hansa Verlag, Seite 254, Bild 7 bzw. Seite 327, Bild 6). Grundelemente grafischer Struktur-, Fluss- und Ablaufpläne sind in der Norm DIN 66 001 aufgeführt.

In "Visuelle Sprachen - ein unaufhaltsamer Trend in der Industrie" (Josef Hübl, SPS/IPC/Drives - Tagungsband, Seite 88 - 95, 23. - 25. November 1999, Nürnberg, Verlag Hüthig GmbH, Heidelberg) ist außerdem angegeben, dass Kontrollfluss- bzw. Datenflussdiagramme für die Steuerung von Automatisierungsaufgaben mit Hilfe graphischer Editoren erstellt werden.

Das US Patent 5,508,909 offenbart ein Verfahren, bei dem ein Anwender zwischen einer textbasierten Sprache und einer leiterbasierten Sprache wechseln kann. In einem zugehörigen System gibt es hierzu einen bidirektionalen Sprachwandler, der mit einem Compiler zusammenwirkt. Der bidirektionale Sprachwandler arbeitet so, dass er Sprachanweisungen, die textbasiert sind, in die leiterbasierte Sprachdarstellung umwandelt, so dass sie vom dem leiterbasierten Spracheditor verwendet werden können. In ähnlicher Weise kann der bidirektionale Sprachwandler leiterbasierte Sprachanweisungen aus dem leiterbasierten Editor in eine Darstellung in textbasierter Sprache umwandeln, welche von einem Texteditor verwendet werden kann. Somit wird durch Änderung des Quellprogramms in der textbasierten Sprache das Leiterdiagramm dynamisch geändert, und Änderungen des Quellprogramms in der leiterbasierten Sprache ändern den auf der Anzeigevorrichtung gezeigten Text dynamisch. Der verwendete Sprachvorrat ist hierbei auf einen eingangs vorgegebenen Sprachvorrat begrenzt.

Die heutzutage existierenden graphischen Eingabehilfsmittel und graphischen Editoren für die Programmierung von industriellen Steuerungen unterstützen aber einen Anwender ungenügend hinsichtlich adaptiver Mechanismen bezüglich seiner Applikation zugrundeliegenden Hardwarekonfiguration und stellen ihm im grafischen Editor nur einen starren und eingeschränkten Vorrat an Sprachmechanismen zur Verfügung.

Weiterhin unterstützen die heutzutage existierenden graphischen Eingabehilfsmittel und graphischen Editoren für die Programmierung von industriellen Steuerungen nur dediziert die Programmierung der Steuerung eines technischen Prozesses (SPS-Funktionalität) oder die Programmierung der Steuerung der Bewegung einer Verarbeitungs- bzw. Produktionsmaschine. Die Programmerstellung für beide Anwendungsgebiete wird von existierenden Flow Chart-Editoren jeweils nicht adäquat unterstützt.

Ein weiterer Nachteil der heutzutage bei der Programmierung industrieller Automatisierungsaufgaben eingesetzten Flow Chart-Editoren ist, dass die mit ihnen erzeugten Diagramme direkt in ablauffähigen Prozessorcode umgesetzt werden oder dass aus den Diagrammen ASCII-Code erzeugt wird, der dann im jeweiligen Zielsystem laufzeitintensiv interpretiert werden muss. Neben der dadurch resultierenden Unflexibilität bezüglich der Portierung und Übertragung der Programme auf andere Anlagen oder Maschinen bedeutet dieser Mechanismus als weiteren Nachteil für den Anwender nur eingeschränkte Debugging-Möglichkeiten.

Außerdem liegen zusätzliche Nachteile existierender Flow Chart-Editoren im meist starren und unflexiblen Sprachvorrat an für den Anwender verwendbaren Icons und in der fest vorgegebenen sequentiellen Abarbeitungsreihenfolge der Icons bzw. der entsprechenden Funktionsblöcke. Auch bieten existierende Flow Chart-Editoren häufig nur wenig Möglichkeiten zur Formulierung von Synchronisationsmechanismen, die aber insbesondere für die Programmierung von Applikationen in der industriellen Automatisierung sehr oft benötigt werden.

Der Erfindung liegt daher die Aufgabe zugrunde, ein Verfahren gemäß Oberbegriff von Anspruch 1 zu schaffen, wobei einem Anwender durch adaptive Mechanismen ein der zugrunde liegenden Hardwarekonfiguration angemessener Sprachvorrat an grafischen Elementen inklusive geeigneter Funktionsschnittstellen zur Verfügung gestellt wird, wodurch dem Anwender jeweils technologiespezifische Ausprägungen des Flow Chart-Editors bereit stehen.

Gemäß der Erfindung wird diese Aufgabe durch ein Verfahren gemäß Patentanspruch 1 gelöst. Es werden aus anwenderdefinierten Unterprogrammen einer textuellen Sprache automatisch über einen Umsetzer nach Art eines Compilers weitere grafische Elemente in Flow Chart-Notation generiert, welche die Funktionsschnittstelle der entsprechenden Unterprogramme enthalten und die dem Anwender ebenfalls zur Verfügung gestellt werden. Dadurch ist es möglich, dass aus schon vorhandenen Unterprogrammen, die in textueller Sprache vorliegen, oder aus zusätzlichen Unterprogrammen, die in die textuelle Sprache eventuell vom Maschinenbauer eingebracht wurden, automatisch Icons und die dazugehörigen Masken vom System generiert werden und dem Anwender im Flow Chart-Editor zur Verfügung gestellt werden. Die Funktionsschnittstelle und die Übergabeparameter der Unterprogramme der textuellen Sprache werden dabei automatisch für die Flow Chart Icons generiert. Durch diesen Mechanismus lassen sich leicht von OEM-Kunden (Original Equipment Manufacturer) schon in textueller Sprache vorliegende Unterprogramme in den Flow Chart-Editor übernehmen. Damit wird dem Endanwender für seine Flow Chart-Programmierung ein angepasster und erweiterter Sprachvorrat an Icons zur Verfügung gestellt.

Für den Hersteller bzw. für den Vertreiber von Flow Chart Editoren für die Programmierung von industriellen Steuerungen ergibt sich weiterhin der Vorteil, dass sie den Flow Chart Editor mit einem Basisvorrat an grafischen Sprachelementen ausliefern können, der dann in Abhängigkeit evtl. schon vorhandener Unterprogramme der textuellen Sprache auf die Belange eines Anwenders angepasst wird. Ein Flow Chart Editor kann somit in einer anpassbaren Standard- oder Basisversion an Kunden ausgeliefert werden (economies of scale). Für den Anwender ergibt sich dadurch die Möglichkeit einer technologischen Skalierung für seine jeweiligen Anwendungen bezüglich des ihm zur Verfügung stehenden Sprachvorrats an grafischen Elementen.

Eine erste vorteilhafte Ausgestaltung der Erfindung liegt darin, dass die folgenden Schritte aufeinander folgend durchgeführt werden:
a) aus dem Flow Chart wird eine textuelle Sprache erzeugt,
b) die textuelle Sprache wird in einen prozessorunabhängigen Zwischencode kompiliert,
c) der prozessorunabhängige Zwischencode wird auf die Steuerung geladen,
d) der prozessorunabhängige Zwischencode wird in ablauffähigen Prozessorcode umgesetzt.

Dadurch, dass aus den Flow Chart-Diagrammen in einem Zwischenschritt eine textuelle Sprache erzeugt wird, hat der Anwender die Möglichkeit, bereits auf dieser Ebene der textuellen Sprache Plausibilitätsüberprüfungen durchzuführen. Er kann aber auch weitere Sprachelemente, die in der textuellen Sprache vorliegen, zu seiner Anwendung hinzubinden. Dadurch, dass die textuelle Sprache in einem weiteren Zwischenschritt in einen prozessorunabhängigen Zwischencode kompiliert wird, bleibt die angesprochene Flexibilität für den Anwender weiterhin erhalten. Auch auf dieser Zwischencodeebene kann der Anwender Plausibilitätschecks bzw. ein Debugging durchführen. Der letztendlich in der Steuerung ablaufende Prozessorcode wird aus dem prozessorunabhängigen Zwischencode generiert, dadurch wird das Target der Anwendung erst zu einem sehr späten Zeitpunkt festgelegt. Durch die Zwischenschritte bei der Codegenerierung können außerdem sehr leicht unterschiedliche Ziel-Hardwaren bedient werden.

Eine weitere vorteilhafte Ausgestaltung der Erfindung liegt darin, dass dem Anwender im Flow Chart-Editor, in Abhängigkeit von der zugrundeliegenden Maschinenprojektierung und/oder Hardwarekonfiguration adäquate Sprachmechanismen zur Verfügung gestellt werden. Dadurch wird einem Anwender eine Programmierumgebung zur Verfügung gestellt, die auf die zugrunde liegende Hardware abgestimmt ist und somit optimal den vorliegenden Anforderungen und Randbedingungen genügt. Der Sprachvorrat des Flow Chart-Editors adaptiert sich somit selbständig an die vorhandenen HW-Gegebenheiten (z.B. die zugrunde liegende Maschinenkonfiguration).

Eine weitere vorteilhafte Ausgestaltung der Erfindung liegt darin, dass die automatisch generierten grafischen Elemente vom Anwender als Sprachelemente des Flow Charts verwendet werden. Dadurch, dass der Anwender die automatisch generierten Icons als normale Sprachelemente des Flow Chart-Editors verwenden kann, wird der ihm zur Verfügung stehende Sprachvorrat an Flow Chart-Elementen, d.h. an Icons, erweitert. Somit wird die Flexibilität und Ausdrucksmöglichkeit bezüglich der Programmierung von Applikationen für den Anwender erhöht.

Eine weitere vorteilhafte Ausgestaltung der Erfindung liegt darin, dass als textuelle Sprache Structured Text nach IEC 6-1131 verwendet wird. Dadurch, dass mit IEC 6-1131 eine genormte Sprache auf der Ebene der textuellen Sprache verwendet wird, ist der Austausch bzw. die Kopplung mit anderen Programmiersystemen sehr leicht möglich. Außerdem wird durch die Verwendung von IEC 6-1131 als Zwischensprache die Portierung auf unterschiedliche Zielsysteme sehr erleichtert.

Eine weitere vorteilhafte Ausgestaltung der Erfindung liegt darin, dass ein Anwender zum Formulieren von Bedingungen beliebig zwischen den Darstellungsformen textuelle Sprache, Kontaktplan (KOP) und/oder Funktionsplan (FUP) wechseln kann. Dadurch, dass auf der Structured Text-Ebene IEC 6-1131 als textuelle Sprache verwendet wird, können auch andere Darstellungsformen von IEC 6-1131 neben der textuellen Sprache, nämlich Kontaktpläne und/oder Funktionspläne, verwendet werden. Ein Anwender hat somit die Flexibilität, innerhalb dieser Sprachen der SPS-Welt, nämlich Structured Text, Kontaktplan (KOP) oder Funktionsplan (FUP), beliebig zu wechseln. Diese Flexibilität ist insbesondere für die Formulierung von Bedingungen ein großer Vorteil für den Anwender, denn er kann sich die Darstellungs- bzw. Beschreibungsform wählen, in der er die meiste Erfahrung hat, oder die dem zugrunde liegenden Problem angemessen ist. Üblicherweise verwendet ein Anwender für die Darstellung von binären Verknüpfungen Kontaktpläne (KOP) und/oder Funktionspläne (FUP) und für die Formulierung von arithmetischen Berechnungen Structured Text.

Eine weitere vorteilhafte Ausgestaltung der Erfindung liegt darin, dass in der Flow Chart-Notation als Sprachelemente mindestens eine Schleife und/oder mindestens eine Parallelverzweigung vorhanden sind. In den heutzutage gängigen Flow Chart-Editoren werden Schleifen und oft auch Verzweigungen mit Hilfe von Sprungmarken dargestellt. Durch die Verwendung von Sprüngen (Goto-Problematik!) und die dazugehörigen Zielmarken wird die Programmgestaltung aber sehr unübersichtlich und schwer nachvollziehbar. Dadurch, dass dem Anwender als eigene Sprachelemente Schleifen und Parallelverzweigung zur Verfügung stehen, wird die Programmerstellung und auch die Lesbarkeit der Programme erheblich vereinfacht.

Eine weitere vorteilhafte Ausgestaltung der Erfindung liegt darin, dass innerhalb der jeweiligen Parallelverzweigung die einzelnen Befehle im selben Interpolatortakt gestartet werden. Dadurch, dass alle Zweige des Sprachkonstrukts Parallelverzweigung im selben Interpolatortakt bedient werden, ist eine quasi parallele Abarbeitung der in den einzelnen Zweigen des Parallelverzweigungs-Konstrukts enthaltenen Befehle möglich. Neben der sequentiellen wird somit auch die parallele Abarbeitung von Befehlen ermöglicht und durch adäquate Sprachmechanismen in der Programmierumgebung für den Anwender unterstützt.

Eine weitere vorteilhafte Ausgestaltung der Erfindung liegt darin, dass in der Flow Chart-Notation die Funktionsblöcke durch Maskeneingabe parametriert werden. Dadurch wird für den Anwender die Eingabe von Parametern in einer übersichtlichen und leicht verständlichen Form ermöglicht. Für jeden Typ von Funktionsblock existieren Standardmasken, die einem Anwender nur die für den aktuellen Typ möglichen Parametereingaben erlauben. Die Gefahr von fehlerhaften Eingaben wird durch diese Kontextsensitivität reduziert.

Eine weitere vorteilhafte Ausgestaltung der Erfindung liegt darin, dass in der Flow Chart-Notation Funktionsblöcke zu Modulen zusammengefasst werden, die wiederum als Funktionsblöcke erscheinen. Dadurch wird die Übersichtlichkeit des Programmablaufs im Flow Chart für den Anwender erhöht. Ein Anwender kann nämlich logisch zusammengehörende Funktionsblöcke zu einem Modul zusammenfassen und kapseln, wobei dieses Modul wiederum als Funktionsblock im Flow Chart-Editor, d.h. als Icon, erscheint. Durch diesen Mechanismus der Zusammenfassung und Kapselung wird aber nicht nur die Übersichtlichkeit im Ablauf erhöht, auch der Programmablauf lässt sich dadurch strukturieren.

Eine weitere vorteilhafte Ausgestaltung der Erfindung liegt darin, dass in der Flow Chart-Notation ineinander geschachtelte Module möglich sind. Das heißt, ein Modul kann wiederum als Element ein oder mehrere Module enthalten. Module können sozusagen wiederum als Unterprogramme in anderen Modulen verwendet werden, dadurch wird die Übersichtlichkeit und die Struktur des Programmablaufs im Flow Chart erhöht.

Eine weitere vorteilhafte Ausgestaltung der Erfindung liegt darin, dass in der Flow Chart-Notation dem Anwender in den Funktionsblöcken für die Variablenzuweisung jeweils mehrere Zuweisungen möglich sind. Dadurch, dass der Anwender in einem Funktionsblock, d.h. in einem Icon, mehrere Variablenzuweisungen nacheinander eingeben kann und nicht für jede Variablenzuweisung einen neuen Funktionsblock benötigt, wird zum einen die Übersichtlichkeit erhöht, zum anderen wird aber auch das Programmierprinzip der hohen Kohäsion unterstützt, da der Anwender seine Variablenzuweisungen, die sinnvollerweise zu diesem Funktionsblock gehören, auch in diesem einen Funktionsblock gebündelt vornehmen kann.

Eine weitere vorteilhafte Ausgestaltung der Erfindung liegt darin, dass in der Flow Chart-Notation die Funktionsblöcke, die Funktionen repräsentieren, die eine Zeitdauer beanspruchen, Weiterschaltbedingungen enthalten. Funktionen, die eine Zeitdauer beanspruchen, sind z.B. Referenzpunktfahren, Beschleunigen oder Achspositionieren. Solche Funktionen bzw. ihr Zusammenwirken können Anwender mit Hilfe der Weiterschaltbedingungen synchronisieren. Einem Anwender steht somit mit Hilfe der Weiterschaltbedingungen ein Synchronisationsmechanismus zur Verfügung, der es ihm erlaubt, komplexe Bewegungen und Zusammenhänge mehrerer Achsen zu synchronisieren.

Eine weitere vorteilhafte Ausgestaltung der Erfindung liegt darin, dass die grafischen Elemente des Flow Charts automatisch positioniert werden. Wenn ein Anwender ein neues Icon im Flow Chart-Editor darstellen will, wird es automatisch an der Stelle positioniert, die als nächstes dem logischen Programmablauf entspricht. Dadurch, dass ein Anwender die generierten Icons nicht selbst positionieren muss, wird seine Arbeitseffizienz gesteigert.

Eine weitere vorteilhafte Ausgestaltung der Erfindung liegt darin, dass die Icons des Flow Charts automatisch miteinander verbunden werden. Auch hierin liegt eine Steigerung der Arbeitseffizienz des Anwenders, da er die Icons nicht nachträglich per Hand miteinander verbinden muss.

Eine weitere vorteilhafte Ausgestaltung der Erfindung liegt darin, dass das Flow Chart in der Anzeige verkleinert oder vergrößert dargestellt werden kann. Durch diese Zoom-Funktionalität wird für den Anwender die Übersichtlichkeit der Diagramme erhöht und außerdem kann er bestimmte Programmabläufe, die ihn momentan interessieren, durch Vergrößerung graphisch hervorheben.

Eine weitere vorteilhafte Ausgestaltung der Erfindung liegt darin, dass durch Markierungen in der textuellen Sprache eine Rückübersetzung in Flow Chart-Notation möglich ist. Durch die Verwendung von syntaktischen und geometrischen Informationen, die in Form von Markierungen erfolgen, ist es möglich, aus der textuellen Sprache in die Flow Chart-Notation eine Rückübersetzung vorzunehmen. Diese Rückübersetzungsmöglichkeit hat für den Anwender den Vorteil, dass Änderungen, die auf der Ebene der textuellen Sprache eingegeben werden, unmittelbar im Flow Chart-Editor in der Flow Chart-Notation nachgezogen werden können und somit für den Anwender in den Flow Chart-Diagrammen sichtbar sind. Solche rückübersetzten Programme kann der Anwender dann auf der Graphikebene mit Hilfe des Flow Chart-Editors weiterbearbeiten und daraus im weiteren Vorgehen Steuerungscode erzeugen.

Die wesentlichen mit der Erfindung erzielten Vorteile bestehen also insbesondere darin, dass aus Unterprogrammen, die in der textuellen Sprache vorliegen, für den Flow Chart-Editor Icons generiert werden, die die Funktionsschnittstelle der entsprechenden Unterprogramme automatisch enthalten. Wenn ein OEM-Kunde bereits Unterprogramme in der textuellen Sprache erstellt hat, so können diese Unterprogramme automatisch durch entsprechende Icons den Sprachvorrat des Flow Chart-Editors erweitern.

Ein weiterer sehr großer Vorteil liegt darin, dass ein Anwender in einer einheitlichen Programmierumgebung sowohl Bewegungssteuerungsaufgaben (Motion Control) und Prozesssteuerungsaufgaben (SPS-Aufgaben) in einer jeweils angemessenen Form programmieren kann. Weiterhin ist von Vorteil, dass die Programmierumgebung sich projektsensitiv verhält, d.h. dass dem Anwender in Abhängigkeit von der zugrunde liegenden Hardware bzw. Maschinenprojektierung zusätzliche dedizierte Sprachelemente zur Verfügung gestellt werden.

Ein weiterer Vorteil liegt darin, dass der Anwender sowohl für die sequentielle als auch für die zyklische Programmierung der Steuerungsabläufe unterstützt wird. Dadurch, dass eine geschachtelte Modulbildung von Funktionsblöcken zur Verfügung steht, hat der Anwender den Vorteil, die Übersichtlichkeit und die Struktur seiner Programme zu erhöhen, da er die Designkriterien, Lokalität und hohe Kohäsion sehr leicht umsetzen kann.

Ein Ausführungsbeispiel der Erfindung ist in der Zeichnung dargestellt und wird im folgenden erläutert.

Dabei zeigen:
- FIG 1: in einer Schemadarstellung ein Engineering-System, das zugehörige Run-Time-System und den zu steuernden technischen Prozess,
- FIG 2: zeigt in einem Übersichtsbild Elemente des Engineering-Systems und der Steuerung sowie ihre Beziehungen untereinander,
- FIG 3: zeigt ebenfalls in Form eines Übersichtsbildes den programmtechnischen Zusammenhang zwischen Elementen des Engineering-Systems und des Run-Time-Systems,
- FIG 4: zeigt ein einfaches Diagramm in Flow ChartNotation,
- FIG 5: zeigt ein komplexes Diagramm in Flow Chart-Notation mit den Kontrollstrukturen while und if,
- FIG 6: zeigt ebenfalls ein komplexes Diagramm in Flow Chart-Notation mit dem Sprachkonstrukt Parallelverzweigung (sync),
- FIG 7: zeigt eine Parametriermaske für den Befehl "positioniere Achse",
- FIG 8: zeigt in einem Übersichtsbild, wie der Sprachvorrat des Flow Chart Editors erweitert wird,
- FIG 9: zeigt eine Auswahl von Sprachelementen (so genannten Icons) des Flow Chart-Editors.

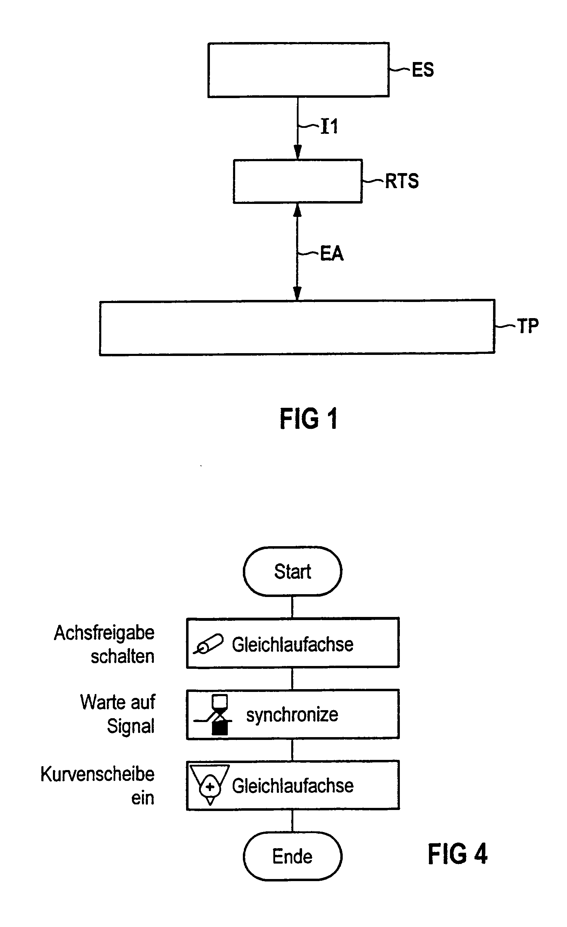

In der Darstellung gemäß FIG 1 wird in Form eines Strukturbildes gezeigt, dass die Steuerung eines technischen Prozesses TP über das Run-Time-System RTS einer industriellen Steuerung erfolgt. Die Verbindung zwischen dem Run-Time-System RTS der Steuerung und dem technischen Prozess TP geschieht bidirektional über den Ein-/Ausgang EA. Die Programmierung der Steuerung und damit das Festlegen des Verhaltens des Run-Time-Systems RTS geschieht im Engineering-System ES. Das Engineering-System ES enthält Werkzeuge für die Konfigurierung, Projektierung und Programmierung für Maschinen bzw. für die Steuerung technischer Prozesse. Die im Engineering-System erstellten Programme werden über den Informationspfad I1 in das Run-Time-System RTS der Steuerung übertragen. Bezüglich seiner Hardware-Ausstattung besteht ein Engineeringsystem ES üblicherweise aus einem Computersystem mit Grafikbildschirm (z.B. Display), Eingabehilfsmitteln (z.B. Tastatur und Maus),Prozessor, Arbeits- und Sekundärspeicher, einer Einrichtung für die Aufnahme computerlesbarer Medien (z.B. Disketten, CDs) sowie Anschlusseinheiten für einen Datenaustausch mit anderen Systemen (z.B. weiteren Computersystemen, Steuerungen für technische Prozesse) oder Medien (z.B. Internet). Eine Steuerung besteht üblicherweise aus Eingabe- und Ausgebeeinheiten, sowie aus Prozessor und Programmspeicher.

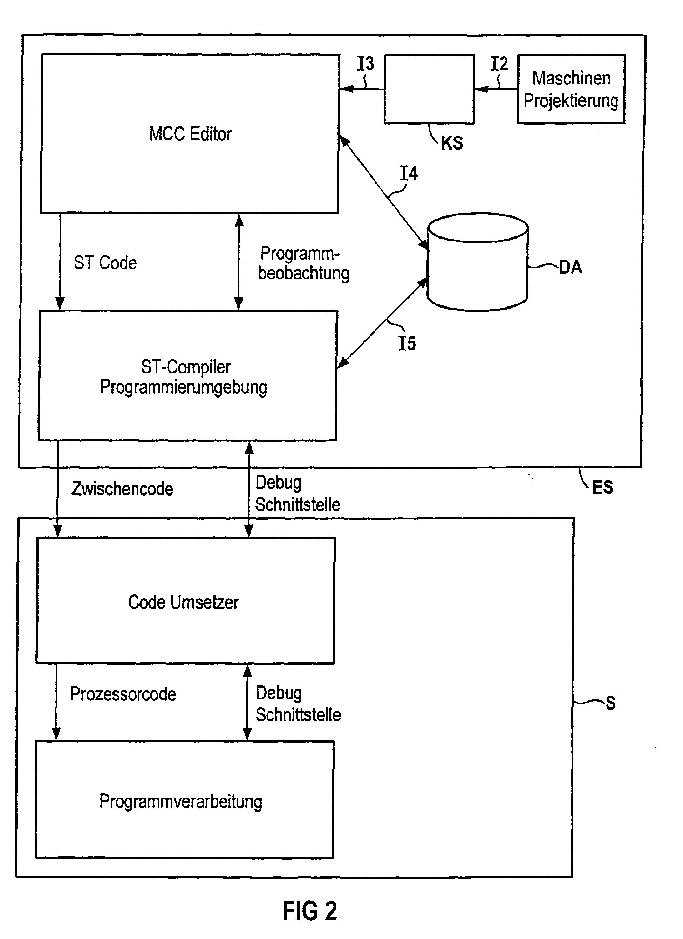

In der Darstellung gemäß FIG 2 werden in Form eines Übersichtsbildes Elemente des Engineering-Systems und der Steuerung sowie ihr Zusammenspiel dargestellt. Dabei werden die einzelnen Elemente in Form von Rechtecken dargestellt, die im Engineering-System enthaltene Datenablage wird in Form des üblicherweise verwendeten Datenspeichersymbols dargestellt. Durch Pfeile (unidirektional oder bidirektional) wird der datenlogische bzw. der ablauflogische Zusammenhang zwischen den Elementen dargestellt. Die obere Hälfte von FIG 2 zeigt die Elemente des Engineering-Systems, nämlich den MCC-Editor, den ST-Compiler mit Programmiergebung, den Konfigurations-Server KS und die Maschinenprojektierung sowie eine Datenablage. Die Zugehörigkeit dieser Elemente zum Engineering-System wird durch Umrandung dargestellt. Die Steuerung beinhaltet den Codeumsetzer und die Programmverarbeitung. Auch die Elemente der Steuerung, die sich im unteren Abschnitt von FIG 2 befinden, sind umrandet. Sowohl das Engineering-System als auch die Steuerung können noch weitere Elemente beinhalten, sie sind aber aus Gründen der Übersichtlichkeit nicht dargestellt.

Im MCC-Editor (MCC steht für Motion Control Chart) werden die graphischen Programmabläufe erzeugt. Die Sprachelemente des Editors, d.h. die Icons, können z.B. über eine Befehlsleiste im Bildschirm, die mit Hilfe einer Maus bedient wird oder denkbare andere Eingabehilfsmittel mit dem Editor erzeugt und dargestellt werden. Ein Anwender kann mit Hilfe des MCC-Editors Funktionsblöcke (Icons) und Kontrollstrukturen zu einem Flow Chart verknüpfen, d.h. er kann den MCC-Editor als graphisches Programmier-Tool für die Erstellung von Programmen für Bewegungssteuerungen und/oder Prozesssteuerungen verwenden. Aus dem Flow Chart wird ein textuelles Programm bzw. eine textuelle Sprache (üblicherweise Structured Text nach IEC 6-1131) erzeugt. Dieser Structured Text-Code (ST-Code) wird vom Structured Text-Compiler (ST-Compiler, der Teil der Programmierumgebung ist) in einen prozessorunabhängigen Zwischencode kompiliert. Dieser Zwischencode wird auf die Steuerung geladen und dort vom Codeumsetzer in ablauffähigen Prozessorcode umgesetzt. Dieser wird von der Programmverarbeitung innerhalb der Steuerung zum Ablauf gebracht. Durch die unidirektionalen Pfeile im linken Abschnitt von FIG 2 werden die Schritte der Code- bzw. Programmumsetzung dargestellt. Parallel zu den drei von oben nach unten verlaufenden unidirektionalen Pfeilen, die diese Umsetzung darstellen, verlaufen jeweils zwischen den Elementen MCC-Editor, ST-Compiler, Codeumsetzer und Programmverarbeitung drei bidirektionale Pfeile, die Debug-Schnittstellen bzw. die Möglichkeit einer Programmbeobachtung darstellen. Zwischen Programmverarbeitung und Codeumsetzer existiert eine Debug-Schnittstelle auf Prozessorcode-, d.h. auf Objektcodeebene, eine weitere Debug-Schnittstelle existiert zwischen dem Codeumsetzer und dem ST-Compiler, diese Debug-Schnittstelle befindet sich auf Zwischencodeebene. Zwischen dem ST-Compiler und dem MCC-Editor befindet sich eine weitere Debug- bzw. Programmbeobachtungsschnittstelle auf Ebene von Structured Text (ST-Code).

In FIG 2 sind als weitere Elemente des Engineering-Systems die Maschinenprojektierung und ein Konfigurations-Server KS dargestellt. In der Maschinenprojektierung wird mit Hilfe geeigneter Werkzeuge die Auslegung der Hardware bzw. der zugrunde gelegten Maschine vollzogen. Das heißt, in der Maschinenprojektierung wird z.B. festgelegt, welche Achstypen in welcher Anzahl physikalisch vorhanden sind. Diese Maschineninformationen werden über den Konfigurations-Server KS in den MCC-Editor eingespeist. Die Übertragung dieser Informationen wird durch die unidirektionalen Pfeile I2 und I3 dargestellt. Weiterhin beinhaltet der Konfigurations-Server KS weitere relevante Konfigurationsinformationen für das System, die z.B. auch für die Lizenzierung von zugehörigen Softwarekomponenten verwendet werden können. Eine Datenablage DA, dargestellt durch das gängige Datenspeichersymbol, beinhaltet drei Aspekte: Zum einen das vom MCC-Editor für ein Flow Chart erzeugtes Objektmodell, als zweites den dazugehörigen Structured Text und der dritte Inhalt der Datenablage DA ist der aus dem Structured Text generierte Zwischencode. Die Datenablage DA steht in bidirektionaler Verbindung zum MCC-Editor und ST-Compiler, dargestellt durch die bidirektionalen Informationspfeile I4 und I5.

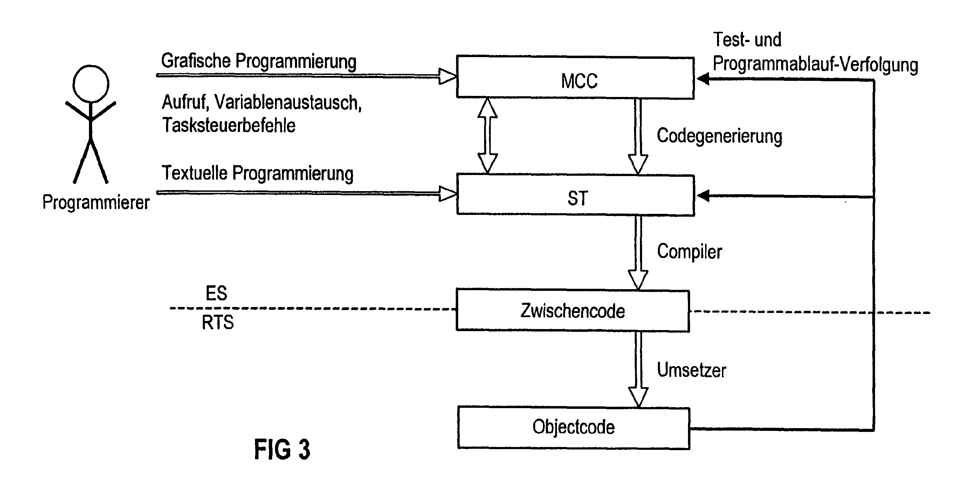

Die Darstellung gemäß FIG 3 zeigt als Übersichtsbild die vorhandenen Abstraktionsebenen aus Sicht des Programmcodes. Die unterschiedlichen Programmcode-Ebenen sind als Rechtecke dargestellt. Die oberste Ebene ist die MCC-Ebene, in der die Flow Chart-Programme erzeugt werden. Die nächstuntergeordnete Codeebene ist die Structured Text-Ebene ST. In die ST-Ebene gelangt man aus der MCC-Ebene durch eine entsprechende Codegenerierung, dargestellt durch einen Pfeil vom MCC-Block zum ST-Block. Unterhalb der Structured Text-Ebene ST liegt die Zwischencode-Ebene. Durch einen Compiler wird aus dem Structured Text-Programm ein prozessorunabhängiger Zwischencode kompiliert, dargestellt durch den Pfeil vom ST-Block zum Block mit dem Namen Zwischencode. Unterhalb der Zwischencode-Ebene liegt die unterste Codeebene, nämlich die Objektcode-Ebene, die den ablauffähigen Prozessorcode beinhaltet. Aus dem Zwischencode wird über einen Umsetzer der Objektcode erzeugt, ebenfalls dargestellt durch einen Pfeil vom Zwischencodeblock zum Objektcodeblock. Von der Objektcode-Ebene gehen rechtwinklig abgewinkelte Pfeile zurück zur Structured Text-Codeebene ST und zur Flow Chart-Ebene MCC. Dadurch ist angedeutet, dass auf diesen Ebenen Test- und Programmverfolgungsaktivitäten stattfinden können, auf der Basis des Objektcodes. Durch den fetten Doppelpfeil zwischen der MCC- und der ST-Ebene wird angedeutet, dass zwischen diesen beiden Ebenen Aufrufe, Task-Steuerbefehle und Variablenaustauschfunktionen möglich sind. Die gestrichelte Linie in FIG 3 zeigt die Grenze zwischen dem Engineering System ES und dem Run-Time-System RTS der Steuerung (S; FIG 2) an. Die Grenze verläuft durch die Zwischencode-Ebene, alles, was oberhalb der gestrichelten Linie ist, gehört zum Engineering System ES, alles, was unterhalb der gestrichelten Linie stattfindet, gehört zum Run-Time-System RTS.

Weiterhin wird in FIG 3 gezeigt, wie ein Programmierer oder Anwender (am linken Bildrand dargestellt durch ein stilisiertes Strichmännchen) im Engineering System ES Eingaben einbringen kann. Er kann zum einen auf der MCC-Ebene mit Hilfe der graphischen Programmierung Flow Charts erzeugen, zum anderen kann er auf der Structured Text-Ebene ST durch eine textuelle Programmierung Programme erstellen. Beide Eingabemöglichkeiten sind durch Pfeile vom Strichmännchen zum MCC-Block bzw. zum ST-Block dargestellt.

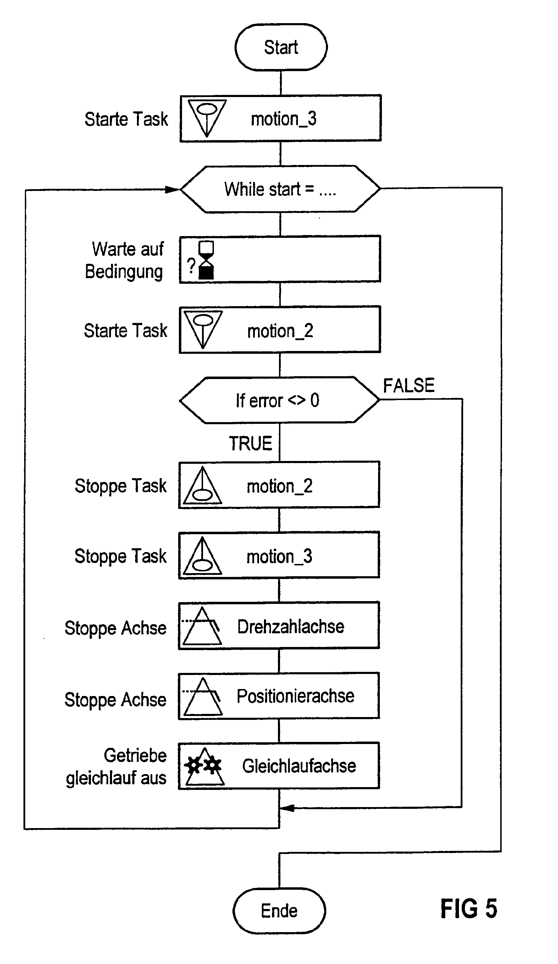

Darstellung gemäß FIG 4 zeigt einen einfachen Programmablauf für die Programmierung von Achsbewegungen. Jedes Flow Chart beginnt mit einem Startknoten und endet mit einem Endeknoten. Diese Programmbegrenzungssymbole tragen die Bezeichnung "Start" bzw. "Ende". Start- und Endesymbole werden jeweils durch ein Rechteck dargestellt, dessen Stirnseiten durch zwei Halbkreise ausgebildet sind. Die Programmbefehle werden durch Rechtecke dargestellt, die einen Bezeichner und ein graphisches Symbol beinhalten, welches den hinterlagerten Befehl repräsentiert.

Die Flow Chart-Symbole werden üblicherweise über eine Eingabeleiste mit Hilfe einer Maus im Flow Chart-Editor erzeugt, wobei auch andere Eingabehilfsmittel wie z.B. ein Touch Pad denkbar sind. Alternativ wäre auch eine Bedienung über Tastatur mit oder ohne Maus möglich.

Die Flow Chart-Symbole werden vom Flow Chart-Editor defaultmäßig untereinander ausgerichtet und durch eine Linie miteinander verbunden. Im Flow Chart nach FIG 4 wird nach dem Start eine Gleichlaufachse freigeschaltet, danach wird auf ein Synchronisierungssignal gewartet und als nächster und letzter Befehl des Flow Charts wird für eine Gleichlaufachse eine Kurvenscheibe eingeschaltet. Die Befehlsequenz von FIG 4 wird beendet durch das Endesymbol.

Die Darstellung gemäß FIG 5 zeigt ein komplexes Flow Chart mit Kontrollstrukturen für eine While-Schleife und für das If-Konstrukt. Das While- und das If-Konstrukt werden jeweils durch sechseckige, wabenförmige Symbole dargestellt. Ansonsten werden im Programmablauf, wie er in FIG 5 dargestellt ist, die gleichen Typen von Symbolen verwendet, wie sie schon aus FIG 4 bekannt sind. Auch das Flow Chart nach FIG 5 beginnt mit dem Start- und endet mit dem Endesymbol. Unmittelbar nach dem Startknoten folgt ein Befehl, der die Task "motion_3" startet. Dieser Befehl ist vom Typ "Starte Task". Das Rechteck für diesen Befehl enthält deshalb auch das zugehörige entsprechende Symbol, welches das Starten einer Task darstellt. Als nächstes im Programmablauf, wie er in FIG 5 dargestellt ist, folgt das sechseckige wabenförmige While-Konstrukt. Solange die im While-Konstrukt angegebene Bedingung true ist, werden die auf das While-Konstrukt folgenden Befehle zyklisch nacheinander ausgeführt. Das Ende der Befehlsfolge einer While-Schleife wird dargestellt durch einen abgewinkelten Pfeil, der vom letzten Symbol des While-Konstrukts (in FIG 5 ist dies der Befehl vom Typ "Getriebegleichlauf aus", bezogen auf eine Gleichlaufachse) von unten abgeht und auf der linken Seite von FIG 5 zurück in das While-Konstrukt mündet. Ist die Bedingung im While-Konstrukt nicht mehr erfüllt, dann wird die Befehlsfolge, die zum While-Konstrukt gehört, nicht mehr ausgeführt. In FIG 5 wird dies dargestellt durch eine rechtwinklige Verbindungslinie, die das While-Symbol auf der rechten Seite verlässt und rechter Hand die zum While-Symbol gehörende Symbolbefehlsfolge umgeht und in auf das dieser Befehlsfolge unmittelbar folgende Symbol einmündet, in FIG 5 ist dies das Ende-Symbol. Wenn aber die While-Bedingung erfüllt ist, wird folgende Befehlsfolge abgearbeitet: Unmittelbar nach dem While-Konstrukt folgt ein Befehl, der das Warten auf eine Bedingung repräsentiert. Auch dieser Befehl enthält ein entsprechendes mnemotechnisches grafisches Symbol, das den Wartevorgang graphisch darstellt. Als nächstes folgt ein Befehl, der die Task "motion_2" startet. Auch dieser Befehl ist vom Typ "Starte Task" und enthält das entsprechende graphische Symbol. Nach diesem Befehl folgt das If-Konstrukt, das genauso wie das While-Konstrukt durch ein sechseckiges, wabenförmiges Symbol dargestellt wird. Ist die If-Bedingung (in FIG 5 dargestellt durch "error <> 0"), erfüllt dann wird im True-Zweig die Befehlsfolge weiter abgearbeitet, ansonsten, wenn die Bedingung nicht erfüllt ist, wird die Befehlsfolge im False-Zweig weiter abgearbeitet. Im True-Zweig der If-Bedingung folgt als nächster Befehl ein Befehl, der die Task "motion_2" stoppt. Dieser Befehl ist vom Typ "Stoppe Task" Darauf folgt ein Befehl, der die Task "motion_3" stoppt. Auch dieser Befehl ist vom Typ "Stoppe Task". Diese Befehle werden außerdem durch dazugehörende entsprechende Symbole repräsentiert. Als nächstes in der Befehlsfolge kommen zwei "Stoppe Achs"-Befehle. Im ersten solchen Befehl wird eine Drehzahlachse gestoppt, im darauffolgenden eine Positionierachse, auch diese "stoppe Achs"-Befehle werden durch dazugehörende entsprechende graphische Symbole repräsentiert. Der nächste und zugleich der letzte Befehl in FIG 5 bezieht sich auf eine Achse mit dem Namen "Gleichlaufachse", nämlich auf das Ausschalten des Getriebegleichlaufes ("Getriebegleichlauf aus"), auch dieser Befehl wird durch ein entsprechendes graphisches Symbol repräsentiert. Die Symbole des Flow Charts sind durch Linien miteinander verbunden, womit der Programmablauf dargestellt wird. Von diesem Befehl, der den letzten Befehl im While-Konstrukt darstellt, geht ein rechtwinklig abgewinkelter Pfeil zurück zu diesem While-Konstrukt. Dadurch wird das zyklische Abarbeiten der Befehlsfolge dargestellt. Im While-Konstrukt wird geprüft, ob die Bedingung erfüllt ist. Ist sie erfüllt oder weiterhin erfüllt, wird die Befehlsfolge noch einmal durchlaufen. Ist sie nicht erfüllt, wird das While-Konstrukt verlassen und, wie beispielhaft in FIG 5 dargestellt, mit dem Ende-Symbolfortgefahren, d.h. der durch das Flow Chart dargestellte Programmablauf wird beendet.

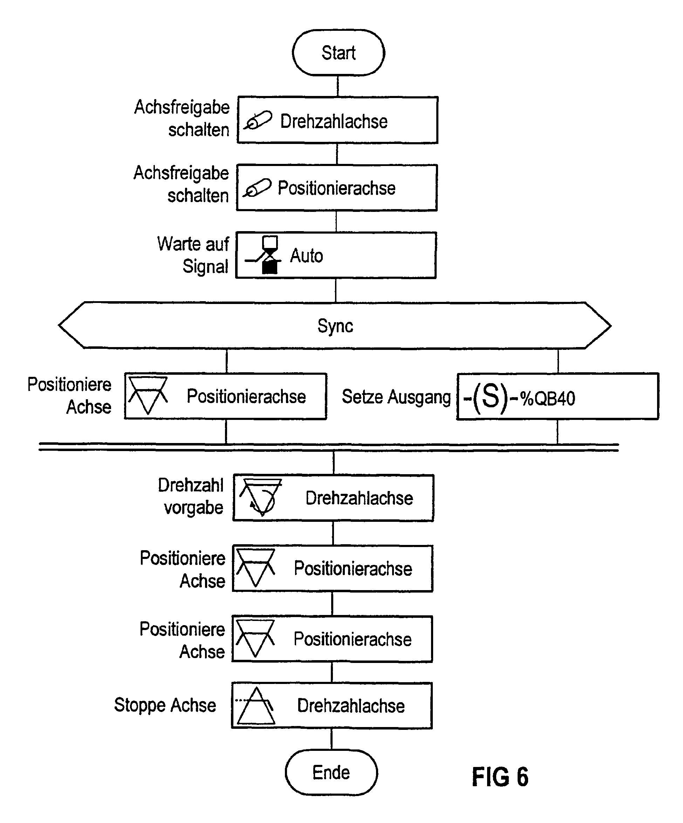

Die Darstellung gemäß FIG 6 zeigt ebenfalls ein komplexes Diagramm in Flow Chart-Notation mit dem Sprachkonstrukt Parallelverzweigung (sync). In FIG 6 folgt auf das Start-Symbol ein Befehl, der sich auf eine Drehzahlachse bezieht, nämlich "Achsfreigabe schalten". Auch für diesen Befehl wird im Befehlsrechteck ein graphisches Symbol angegeben, das diesen Befehl repräsentiert. Danach folgt wiederum ein Befehl vom Typ "Achsfreigabe schalten", diesmal aber bezogen auf eine Positionierachse, auch hier ist das dazugehörige entsprechende Symbol angegeben. Der nächstfolgende Befehl ist ein Synchronisationsbefehl "warte auf Signal", in FIG 6 mit "Auto" bezeichnet und mit dem entsprechenden Symbol versehen.

Als nächstes Symbol in FIG 6 folgt das Symbol für die Parallelverzweigung (sync). Dieses Symbol wird ebenfalls wie das While- oder das If-Konstrukt durch ein sechseckiges, wabenförmiges graphisches Element dargestellt. Alle Befehle, die in dem Sektor unmittelbar unter dem Symbol für die Parallelverzweigung angeordnet sind, werden im selben Interpolatortakt gestartet. In FIG 6 sind dies die Befehle "Positioniere Achse", bezogen auf eine Positionierachse (dieser Befehlstyp beinhaltet auch das zugehörige entsprechende graphische Symbol) und ein Befehl vom Typ "Setze Ausgang". Der Befehlstyp "Setze Ausgang" ist ebenfalls durch ein Rechteck dargestellt, dieses Rechteck enthält die Adresse des Ausgangs (%QB40) und das entsprechende Symbol für diesen Setz-Befehl (S steht für Set). Die Befehle, die zu einem Parallelverzweigungssymbol gehören, d.h. die innerhalb desselben Interpolatortakts gestartet werden, sind mit dem Parallelverzweigungssymbol nach oben mit einer Linie verbunden und nach unten sind sie mit einer Doppellinie verbunden. Diese waagrechte Doppellinie zeigt an, dass die parallele Abarbeitung wieder aufgehoben ist und dass mit der Bearbeitung des nachfolgenden Befehls so lange gewartet wird, bis alle Aktionen in der Parallelverzweigung beendet sind. Sie ist somit auch das Ende-Symbol des Parallelverzweigungskonstrukts. Als nächstes folgt ein Befehl vom Typ "Drehzahlvorgabe", der sich auf eine Drehzahlachse bezieht. Darauf folgen zwei Befehle vom Typ "Positioniere Achse", die sich jeweils auf Positionierachsen beziehen. Darauf folgt wieder ein Befehl vom Typ "Stoppe Achse", der sich auf eine Drehzahlachse bezieht. Die Rechtecke, die diese genannten Befehle darstellen, beinhalten natürlich auch wieder entsprechende dazugehörige graphische Symbole. Nach dem Befehl vom Typ "Stoppe Achse", der sich auf die schon genannte Drehzahlachse bezieht, folgt das Ende-Symbol.

Die hier dargestellte Art der Flow Chart-Programmierung unterstützt unterschiedliche Arten der Programmierung. Zum einen wird durch das Parallelverzweigungssymbol mit dem Starten der dazugehörigen Befehle in einem Interpolatortakt eine mehr oder weniger echte Parallelität erreicht, d.h. die Programmierung paralleler Threads wird unterstützt, und ihre dazugehörige Abarbeitung wird ermöglicht. Zum anderen wird die zyklische Programmierung, d.h. auch die zyklische Programmabarbeitung, unterstützt, es kann nämlich dargestellt werden, dass aufeinander folgende Befehle nur angestoßen werden, wobei aber jeweils nicht auf die Abarbeitung des vorhergehenden Befehls gewartet werden muss. Aber auch die Programmierung und die Darstellung solcher sequentiellen Abläufe wäre möglich, dass nämlich bei Anstoß eines Befehls auf die Abarbeitung dieses Befehls gewartet wird, bis der nächste Befehl angestoßen und abgearbeitet wird. Die hier vorgestellte Flow Chart-Programmierung ist somit für einen Anwender sehr flexibel anwendbar und für unterschiedliche Applikationen einsetzbar.

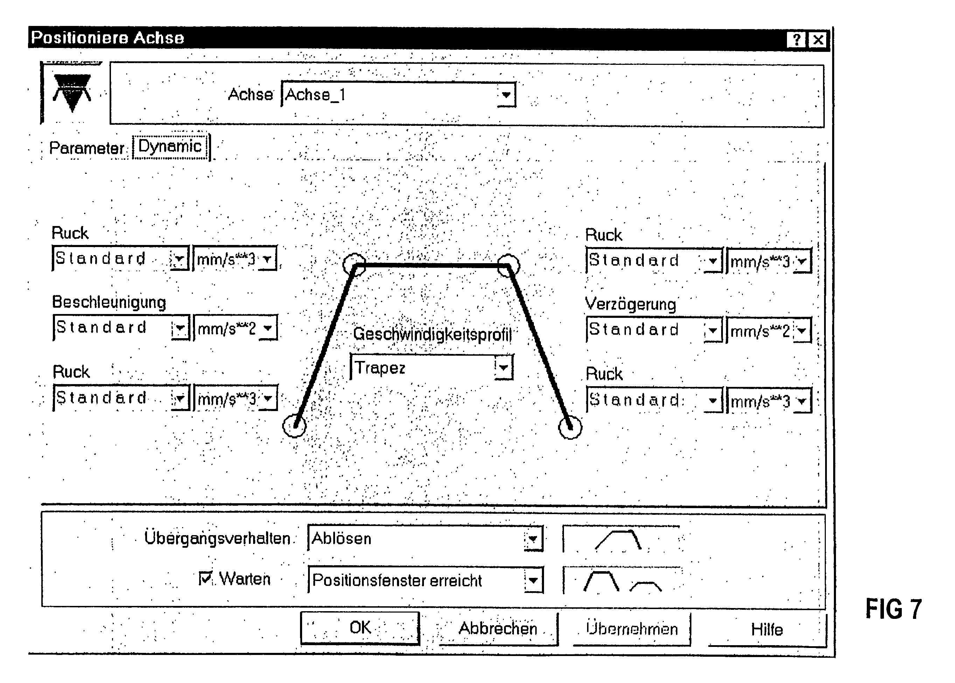

Die Darstellung gemäß FIG 7 zeigt eine Parametriermaske für den Flow Chart-Befehl "Positioniere Achse". Oben links im oberen Balken der Parametriermaske steht die Bezeichnung des entsprechenden Befehls, in diesem Fall "Positioniere Achse". Der obere Balken beinhaltet auf seiner rechten Seite zwei Schalter, ein Schalter mit einem Fragezeichen versehen beinhaltet eine Online-Hilfe, der zweite Schalter, mit x versehen, wird für das Schließen der Maske verwendet. Die Parametriermaske beinhaltet unterschiedliche Eingabesektoren. Im obersten Eingabesektor kann die entsprechende Achse ausgewählt werden mit Hilfe eines Eingabemenüs (dargestellt durch einen Eingabeknopf mit einem kleinen auf dem Kopf stehenden Dreieck) können im Eingabefenster die entsprechenden Achsen ausgewählt werden. In diesem obersten Sektor ist links oben auch das zu diesem Befehl dazugehörige graphische Symbol angegeben, nämlich ein auf dem Kopf stehendes Dreieck mit der Spitze nach unten, das waagrecht mittig mit einer dunklen Linie versehen ist, wobei an den Enden dieser Linie jeweils nach unten abgeschrägte weitere kleine Linien angebracht sind. Der nächste und größte Sektor der Parametriermaske stellt die Möglichkeiten dar, Parameter einzugeben. Die Parameter sind, je nach Befehl, unterschiedlich. Sie werden über benamte Reiter, die auf einer Reiterleiste angeordnet sind, wie in gängigen Programmoberflächen üblich, logisch sortiert. Die erste Seite (in FIG 7 ist diese Seite durch den Reiter "Parameter" aufblendbar) trägt üblicherweise die Parameter, die unbedingt zur Parametrierung des Befehls angegeben werden müssen. Für den Befehl "Positioniere Achse" ist ein unbedingter Parameter z.B. die Zielposition einer Achsbewegung.

Die Anzahl und Bedeutung der Reiter ist befehlsabhängig unterschiedlich. In FIG 7 ist dargestellt, dass für den Befehl "Positioniere Achse" neben dem Reiter "Parameter" noch ein Reiter "Dynamic" vorhanden ist. Mit diesem Reiter können für die Beschreibung des dynamischen Verhaltens Eingaben zu Ruck und Beschleunigung sowie zum Geschwindigkeitsprofil gemacht werden. Diese Eingaben können über Eingabefelder und dazugehörigen Menüs gemacht werden. In Abbildung von FIG 7 wurde als Geschwindigkeitsprofil die Trapezform gewählt. Diese Form wurde auch graphisch in der Mitte dieses Eingabesektors stilisiert dargestellt. Im unten darauffolgenden Eingabesektor der Parametriermaske können weitere Eingaben, z.B. für das Übergangsverhalten, gemacht werden. Im Beispiel von FIG 7 wurde für das Übergangsverhalten "Ablösen" eingegeben. Zusätzlich können Wartebedingungen eingegeben werden, indem das Kästchen "Warten" mit einem Häkchen versehen wird. Zu diesem Synchronisieren können in einem dazugehörenden Eingabefenster weitere Eingaben gemacht werden. Im Beispiel nach FIG 7 wurde "Positionsfenster erreicht" dafür eingegeben. Auch diese Eingaben werden durch stilisiert dargestellte Achsprofile unterstützt. Das untere Ende einer Parametrierachse besteht aus vier Eingabeknöpfen, nämlich einem "OK"-Knopf, einem "Abbrechen"-Knopf, einem "Übernehmen"-Knopf und einem "Hilfe"-Knopf. Mit Hilfe dieser Eingabeknöpfe können Anwender entweder die Eingaben übernehmen, bestätigen, verwerfen oder die Eingabehilfe aufrufen. Mit Hilfe der Wartebedingungen können durch einen Anwender sogenannte Weiterschaltbedingungen spezifiziert werden, die Funktionen (z.B. Referenzpunktfahren oder Achspositionieren) bzw. ihr Zusammenspiel synchronisieren.

Solche Parametriermasken existieren dediziert für alle Befehle, die mit Hilfe des Flow Chart-Editors eingegeben und bearbeitet werden können. Der Anwender wird also kontextsensitiv mit Hilfe dieser Parametriermasken bei der Programmierung seiner Bewegungs- und Steuerungsabläufe unterstützt.

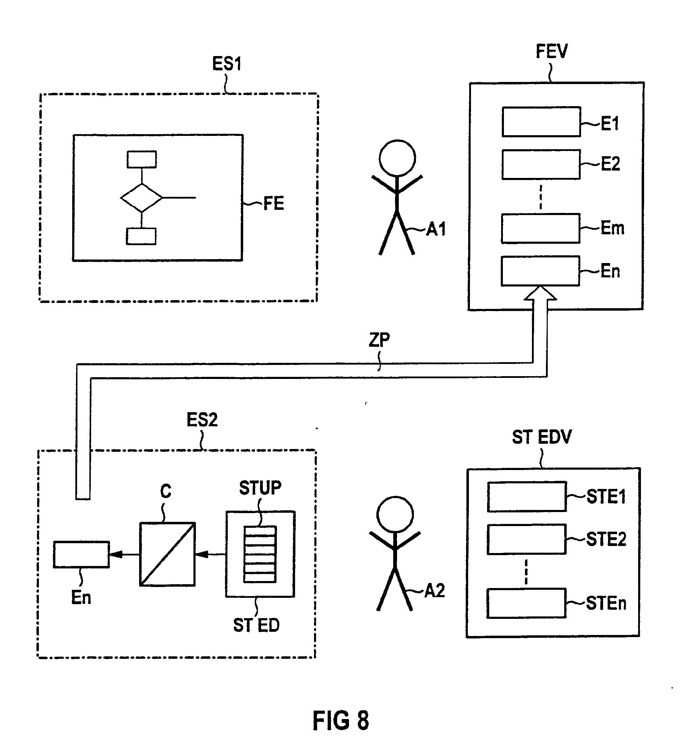

Die Darstellung gemäß FIG 8 zeigt in einem Übersichtsbild, wie der Sprachvorrat FEV des Flow Chart Editors FE erweitert wird. In der Ausgangssituation stehen einem Anwender A1 (dargestellt durch ein Strichmännchen) die grafischen Elemente E1 bis Em des Flow Chart Editors FE zur Verfügung. Der Flow Chart Editor FE ist in der Darstellung gemäß FIG 8 links oben als Rechteck dargestellt, das angedeutet grafische Elemente beinhaltet. Der Flow Chart Editor FE ist Teil eines Engineering Systems ES1, dargestellt durch eine gestrichelte Linie. Das Engineeringsystem ES1 enthält noch weitere Elemente, die aber aus Gründen der Übersichtlichkeit nicht dargestellt sind. Der Sprachvorrat FEV des Flow Chart Editors FE, der in der Ausgangssituation die grafischen Elemente E1 bis Em enthält, ist rechts oben in FIG 8 als Rechteck dargestellt.

Die untere Hälfte von FIG 8 zeigt einen Anwender A2 (ebenfalls dargestellt durch ein Strichmännchen) der auf der Structured Text Ebene (ST; FIG 3) mit einem Engineering System ES2 arbeitet. Auf der Structured Text Ebene (ST; FIG 3) stehen dem Anwender A2 innerhalb des Structured Text Editors STED die Structured Text Sprachelemente STE1 bis STEn zur Verfügung, die den Sprachvorrat STEDV des Structured Text Editors darstellen. Auch der Sprachvorrat STEDV des Structured Text Editors STED ist als Rechteck dargestellt. Mit Hilfe der Sprachelemente STE1 bis STEn kann der Anwender A2 im Structured Text Editor STED Unterprogramme STUP erstellen. Diese Unterprogramme STUP werden über einen Umsetzer (z.B. durch einen Compiler C) in grafische Sprachelemente des Flow Chart Editors FE umgesetzt.

In FIG 8 ist links unten skizzenhaft dargestellt, wie diese Generierung grafischer Elemente erfolgt. Beispielhaft erfolgt die Umsetzung innerhalb des Engineering Systems ES2. Das Structured Text Unterprogramm STUP (schematisch dargestellt durch eine Abfolge von Structured Text Elementen aus dem Sprachvorrat STEDV des Structured Text Editors wird durch den Compiler C (dargestellt durch ein Rechteck mit einer Diagonallinie) umgesetzt in das grafische Element En, das auch die Funktionsschnittstelle des ursprünglichen Structured Text Unterprogramms enthält. Der Umsetzvorgang (Structured Text Editor -> Compiler -> grafisches Element) ist dabei schematisch angedeutet durch zwei waagrecht verlaufende Pfeile. Durch den Zuordnungspfeil ZP ist angedeutet, dass das neu generierte grafische Element En den Sprachvorrat FEV des Flow Chart Editors FE erweitert und dem Anwender A1 für dessen Flow Chart Programmierung zur Verfügung steht. Auch das Engineeringsystem ES2 enthält noch weitere Elemente, die aber aus Gründen der Übersichtlichkeit nicht dargestellt sind. Für den beschriebenen Mechanismus ist es außerdem vorstellbar, dass sich die Funktionalitäten der Engineering Systeme ES1 und ES 2 in einem einzigen Engineering System befinden können. Auch können die beiden Anwender A1 und A2 durch eine einzige Person repräsentiert werden.

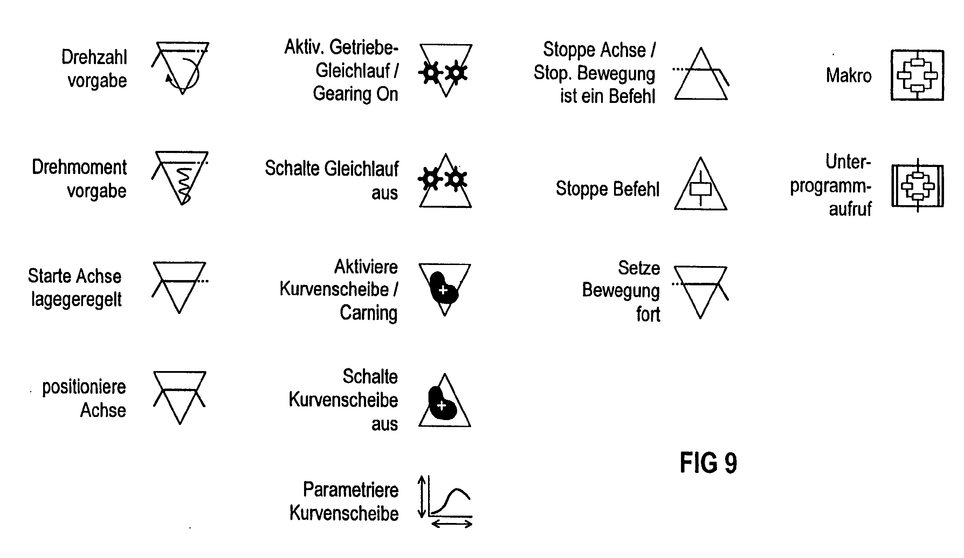

Die Darstellung gemäß FIG 9 zeigt eine Auswahl von Sprachelementen (so genannten Icons) des Flow Chart-Editors. Diese Sprachelemente repräsentieren Befehle, die der Anwender bei der graphischen Programmierung im Flow Chart-Editor benutzen kann. Der MCC-Flow Chart-Editor unterstützt folgende Klassen von Befehlen und stellt für die einzelnen Befehle dieser Klassen jeweils entsprechende Symbole zur Verfügung:
Start-Befehle, Stop-Befehle, Positionierbefehle, Gleichlauf-und Kurvenscheiben-Befehle, Messtaster und SW-Nocken-Befehle, Warte-Befehle, Tasksteuer-Befehle, Befehle für die Manipulierung von Variablen sowie weitere allgemeine Befehle. Außerdem stellt der MCC-Flow Chart-Editor weitere grafischen Kontrollstrukturen für den grafischen Programmablauf zur Verfügung.

## Patentansprüche

1. Verfahren für die Programmierung von industriellen Steuerungen, insbesondere Bewegungssteuerungen, wobei der Anwender mit einem Editor grafische Elemente (E1-Em), insbesondere Kontrollstrukturen und Funktionsblöcke, aus einem vorgegebenen Sprachvorrat zu einem auf einer Anzeigeeinrichtung visualisierbaren Flow Chart (MCC) verknüpft,
**dadurch gekennzeichnet,**
**dass** aus anwenderdefinierten Unterprogrammen (STUP), die in einer textuellen Sprache (ST) vorliegen, automatisch über einen Umsetzer (C) nach Art eines Compilers zur Erweiterung des Sprachvorrats weitere grafische Elemente (En) in Flow Chart-Notation (MCC) generiert werden, welche die Funktionsschnittstelle der entsprechenden Unterprogramme (STUP) enthalten und die dem Anwender (A1,A2) ebenfalls zur Verfügung gestellt werden.

2. Verfahren nach Anspruch 1,
**gekennzeichnet durch** die aufeinander folgenden Schritte:
a) aus dem Flow Chart wird ein Programm in textueller Sprache (ST) erzeugt,
b) das Programm in textueller Sprache (ST) wird in einen prozessorunabhängigen Zwischencode kompiliert,
c) der prozessorunabhängige Zwischencode wird auf die Steuerung geladen,
d) der prozessorunabhängige Zwischencode wird in ablauffähigen Prozessorcode umgesetzt.

3. Verfahren nach einem der vorstehenden Ansprüche,
**dadurch gekennzeichnet,**
**dass** dem Anwender im Flow Chart-Editor, in Abhängigkeit von der zugrundeliegenden Maschinenprojektierung und/oder Hardwarekonfiguration abgestimmte Sprachvorräte des Flow Chart-Editors zur Verfügung gestellt werden.

4. Verfahren nach einem der vorstehenden Ansprüche,
**dadurch gekennzeichnet,**
**dass** die automatisch generierten grafischen Elemente (En) vom Anwender (A1,A2) als Sprachelemente des Flow Charts (MCC) verwendet werden.

5. Verfahren nach einem der vorstehenden Ansprüche,
**dadurch gekennzeichnet,**
**dass** als textuelle Sprache (ST) Structured Text nach IEC 6-1131 verwendet wird.

6. Verfahren nach Anspruch 5,
**dadurch gekennzeichnet,**
**dass** ein Anwender zum Formulieren von Bedingungen beliebig zwischen den Darstellungsformen textuelle Sprache (ST), Kontaktplan (KOP) und/oder Funktionsplan (FUP) wechseln kann.

7. Verfahren nach einem der vorstehenden Ansprüche,
**dadurch gekennzeichnet,**
**dass** in der Flow Chart-Notation (MCC) als Sprachelemente mindestens eine Schleife und/oder mindestens eine Parallelverzweigung vorhanden sind.

8. Verfahren nach Anspruch 7,
**dadurch gekennzeichnet,**
**dass** innerhalb der jeweiligen Parallelverzweigung die einzelnen Befehle im selben Interpolatortakt gestartet werden.

9. Verfahren nach einem der vorstehenden Ansprüche,
**dadurch gekennzeichnet,**
**dass** in der Flow Chart-Notation (MCC) die Funktionsblöcke durch Maskeneingabe parametriert werden.

10. Verfahren nach einem der vorstehenden Ansprüche,
**dadurch gekennzeichnet,**
**dass** in der Flow Chart-Notation (MCC) Funktionsblöcke zu Modulen zusammengefasst werden, die wiederum als Funktionsblöcke erscheinen.

11. Verfahren nach Anspruch 10,
**dadurch gekennzeichnet,**
**dass** in der Flow Chart-Notation (MCC) ineinander geschachtelte Module möglich sind.

12. Verfahren nach einem der vorstehenden Ansprüche,
**dadurch gekennzeichnet,**
**dass** in der Flow Chart-Notation (MCC) dem Anwender in den Funktionsblöcken für die Variablenzuweisung jeweils mehrere Zuweisungen möglich sind.

13. Verfahren nach einem der vorstehenden Ansprüche,
**dadurch gekennzeichnet,**
**dass** in der Flow Chart-Notation (MCC) die Funktionsblöcke, die Funktionen repräsentieren, die eine Zeitdauer beanspruchen, Weiterschaltbedingungen enthalten.

14. Verfahren nach einem der vorstehenden Ansprüche,
**dadurch gekennzeichnet,**
**dass** die grafischen Elemente (E1-En) des Flow Charts automatisch positioniert werden.

15. Verfahren nach einem der vorstehenden Ansprüche,
**dadurch gekennzeichnet,**
**dass** die grafischen Elemente (E1-En) des Flow Charts automatisch miteinander verbunden werden.

16. Verfahren nach einem der vorstehenden Ansprüche,
**dadurch gekennzeichnet,**
**dass** das Flow Chart in der Anzeige verkleinert oder vergrößert dargestellt werden kann.

17. Verfahren nach einem der vorstehenden Ansprüche,
**dadurch gekennzeichnet,**
**dass** durch Markierungen in dem Programm in textueller Sprache eine Rückübersetzung in Flow Chart-Notation (MCC) möglich ist.

## Claims

1. Method for programming industrial controllers, especially motion controllers, the user with an editor linking graphic elements (E1-Em), especially control structures and function blocks, from a predefined language set to form a flow chart (MCC) that can be visualized on a display device,
**characterized in that**
from user-defined subroutines (STUP), which are present in a textual language (ST), further graphic elements (En) are automatically generated in flow chart notation (MCC) by means of a converter (C) in the nature of a compiler to expand the language set; they contain the function interface of the corresponding subroutines (STUP) and are likewise made available to the user (A1, A2).

2. Method according to Claim 1,
**characterized by** the successive steps:
a) a program in textual language (ST) is generated from the flow chart,
b) the program in textual language (ST) is compiled into an intermediate code that is independent of the processor,
c) the processor-independent intermediate code is loaded on to the controller,
d) the processor-independent intermediate code is converted into executable processor code.

3. Method according to one of the preceding claims,
**characterized in that**
the user is supplied in the flow chart editor with coordinated language sets of the flow chart editor, depending on the underlying machine planning and/or hardware configuration.

4. Method according to one of the preceding claims,
**characterized in that**
the automatically generated graphic elements (En) are used by the user (A1, A2) as language elements of the flow chart (MCC).

5. Method according to one of the preceding claims,
**characterized in that**
structured text according to IEC 6-1131 is used as textual language (ST).

6. Method according to Claim 5, **characterized in that**
a user can switch at will between the display forms, textual language (ST), ladder diagram and/or control system function chart, for formulating conditions.

7. Method according to one of the preceding claims,
**characterized in that**
at least one loop and/or at least one parallel branch are present in the flow chart notation (MCC) as language elements.

8. Method according to Claim 7,
**characterized in that**
within the respective parallel branch, the individual commands are started in the same interpolator clock.

9. Method according to one of the preceding claims,
**characterized in that**
the function blocks are parameterized in the flow chart notation (MCC) by screen form input.

10. Method according to one of the preceding claims,
**characterized in that**
in the flow chart notation (MCC), function blocks are grouped into modules, which in turn appear as function blocks.

11. Method according to Claim 10,
**characterized in that**
nested modules are possible in the flow chart notation (MCC).

12. Method according to one of the preceding claims,
**characterized in that**
in the flow chart notation (MCC), several assignments are possible for the user in each case for variable assignment in the function blocks.

13. Method according to one of the preceding claims,
**characterized in that** in the flow chart notation (MCC), the function blocks which represent functions that take up a period of time contain step enabling conditions.

14. Method according to one of the preceding claims,
**characterized in that**
the graphic elements (E1-En) of the flow chart are automatically positioned.

15. Method according to one of the preceding claims,
**characterized in that**
the graphic elements (E1-En) of the flow chart are automatically connected to one another.

16. Method according to one of the preceding claims,
**characterized in that**
the flow chart image can be zoomed in or out in the display.

17. Method according to one of the preceding claims,
**characterized in that**
as a result of markings in the program in textual language, a translation back into flow chart notation (MCC) is possible.

## Revendications

1. Procédé de programmation de commandes industrielles, notamment de commandes cinématiques, dans lequel l'utilisateur combine avec un éditeur des éléments graphiques (E1 à Em), notamment des structures de contrôle et des blocs fonctionnels, issus d'une réserve de langage prédéfinie pour former un organigramme (Flow Chart, MCC) visualisable sur une unité d'affichage,
**caractérisé par le fait que**, à partir de sous-programmes (STUP) qui sont définis par l'utilisateur et qui se présentent dans un langage textuel (ST), on produit automatiquement par l'intermédiaire d'un convertisseur (C), à la manière d'un compilateur et pour l'extension de la réserve de langage, d'autres éléments graphiques (En) en notation d'organigramme Flow Chart (MCC) qui contiennent l'interface fonctionnelle des sous-programmes correspondants (STUP) et qui sont également mis à la disposition de l'utilisateur (A1, A2).

2. Procédé selon la revendication 1,
**caractérisé par** les étapes suivantes:
a) à partir de l'organigramme Flow Chart, on produit un programme en langage textuel (ST),
b) on compile le programme en langage textuel (ST) en un code intermédiaire indépendant du processeur,
c) on charge le code intermédiaire indépendant du processeur sur la commande,
d) on convertit le code intermédiaire indépendant du processeur en un code de processeur exécutable.

3. Procédé selon l'une des revendications précédentes,
**caractérisé par le fait que**, dans l'éditeur d'organigramme Flow Chart, on met à la disposition de l'utilisateur, en fonction de la configuration machine ou matérielle de base, des réserves de langage adaptées de l'éditeur d'organigramme Flow Chart.

4. Procédé selon l'une des revendications précédentes,
**caractérisé par le fait que** l'utilisateur (A1, A2) utilise les éléments graphiques produits automatiquement (En) comme éléments de langage de l'organigramme Flow Chart (MCC).

5. Procédé selon l'une des revendications précédentes,
**caractérisé par le fait que** l'on utilise Structured Text selon IEC 6-1131 comme langage textuel (ST).

6. Procédé selon la revendication 5,
**caractérisé par le fait que**, pour formuler des conditions, un utilisateur peut changer à volonté entre les formes de représentation langage textuel (ST), plan de contacts (KOP) et/ou plan de fonctions (FUP).

7. Procédé selon l'une des revendications précédentes,
**caractérisé par le fait que**, dans la notation d'organigramme Flow Chart (MCC), il y a comme éléments de langage au moins une boucle et/ou au moins un branchement parallèle.

8. Procédé selon la revendication 7,
**caractérisé par le fait que**, à l'intérieur du branchement parallèle respectif, on démarre les instructions individuelles avec le même cycle d'interpolateur.

9. Procédé selon l'une des revendications précédentes,
**caractérisé par le fait que**, dans la notation d'organigramme Flow Chart (MCC), on paramètre les blocs fonctionnels au moyen d'une entrée par masque.

10. Procédé selon l'une des revendications précédentes,
**caractérisé par le fait que**, dans la notation d'organigramme Flow Chart (MCC), on réunit des blocs fonctionnels en modules qui apparaissent à leur tour comme des blocs fonctionnels.

11. Procédé selon la revendication 10,
**caractérisé par le fait que**, dans la notation d'organigramme Flow Chart (MCC), des modules emboîtés les uns dans les autres sont possibles.

12. Procédé selon l'une des revendications précédentes,
**caractérisé par le fait que**, dans la notation d'organigramme Flow Chart (MCC), l'utilisateur peut effectuer dans les blocs fonctionnels pour l'attribution de variables à chaque fois plusieurs attributions.

13. Procédé selon l'une des revendications précédentes,
**caractérisé par le fait que**, dans la notation d'organigramme Flow Chart (MCC), les blocs fonctionnels qui représentent des fonctions qui demandent un certain temps contiennent des conditions de transfert.

14. Procédé selon l'une des revendications précédentes,
**caractérisé par le fait que** les éléments graphiques (E1 à En) de l'organigramme Flow Chart sont positionnés automatiquement.

15. Procédé selon l'une des revendications précédentes,
**caractérisé par le fait que** les éléments graphiques (E1 à En) de l'organigramme Flow Chart sont automatiquement reliés entre eux.

16. Procédé selon l'une des revendications précédentes,
**caractérisé par le fait que** l'organigramme Flow Chart peut être représenté sur l'unité d'affichage sous une forme réduite ou agrandie.

17. Procédé selon l'une des revendications précédentes,
**caractérisé par le fait qu'**une reconversion en notation d'organigramme Flow Chart (MCC) est possible au moyen de marquages dans le programme en langage textuel.
